Europäisches Patentamt

(19) European Patent Office

Office européen des brevets

(11) Veröffentlichungsnummer : **0 118 421**
**B1**

(12) **EUROPÄISCHE PATENTSCHRIFT**

(45) Veröffentlichungstag der Patentschrift :
05.03.86

(51) Int. Cl.⁴ : **A 23 K   1/18**, A 23 K   3/00

(21) Anmeldenummer : **82902727.5**

(22) Anmeldetag : **15.09.82**

(86) Internationale Anmeldenummer :
**PCT/EP 82/00199**

(87) Internationale Veröffentlichungsnummer :
**WO/8401091 (29.03.84 Gazette 84/09)**

(54) **VERFAHREN ZUR HERSTELLUNG VON TROCKENFUTTER FÜR FISCHE.**

(43) Veröffentlichungstag der Anmeldung :
**19.09.84 Patentblatt 84/38**

(45) Bekanntmachung des Hinweises auf die Patenterteilung : **05.03.86 Patentblatt 86/10**

(84) Benannte Vertragsstaaten :
**AT BE CH FR GB LI LU NL**

(56) Entgegenhaltungen :
DE-C-  898 539
DE-C-  970 350
GB-A-  558 889
Process Biochemistry, Vol. 11, No. 10, December 1976 (London, GB) J. Wignall and I. Tatterson 'Fish silage', see pages 17-19
M. Becker und K. Nehring 'Handbuch der Futtermittel', dritter Bd.,1967, Verlag Paul Parey, Hamburg und Berlin, H. Henkel "Aus Tierkörpern u. deren Bestandteilen gewonnene Futtermittel', siehe Seiten 199-279, insbesondere Seiten 235-239 in der Anmel-dung aufgeführt

(73) Patentinhaber : **Pohlhausen, Henn, Dr.
Friedrichstrasse 56
D-2110 Buchholz/Nordheide (DE)**

(72) Erfinder : **Pohlhausen, Henn, Dr.
Friedrichstrasse 56
D-2110 Buchholz/Nordheide (DE)**

(74) Vertreter : **Schupfner, Gerhard D. et al
Müller, Schupfner & Gauger Karlstrasse 5 Postfach 14 27
D-2110 Buchholz/Nordheide (DE)**

Jouve, 18, rue St-Denis, 75001 Paris, France

## Beschreibung

Die Erfindung betrifft ein Verfahren zur Herstellung eines Trockenfutters für Fische unter weitgehender Schonung der im Naturfutter vorkommenden Wirkstoffe wie Enzyme, Vitamine, Wachstumsstoffe und Proteine und unter Herabsetzung des Anteiles umweltbelastender Bestandteile des Futters.

Es ist bekannt, Fische in Aufzuchtanlagen mit pelletiertem, aus Fischmehl unter Hinzufügung verschiedener Zusatzstoffe hergestelltem Trockenfutter zu füttern. Diese Art des Futters wird wegen seiner leichten Transportierbarkeit und guten Lagerfähigkeit am meisten eingesetzt. Es wird gewöhnlich als herabsinkendes, mitunter aber auch schwimmendes pelletiertes Futter hergestellt. Nachteilig in wirtschaftlicher Hinsicht ist der hohe Preis für das ständig knapper werdende Fischmehl. Weiterhin werden die im rohen Fisch vorhandenen Proteine und Wirkstoffe wie Enzyme, Vitamine und Wachstumsstoffe bei der Fischmehl- und Trockenfutterherstellung denaturiert und müssen durch künstlich gewonnene, teuere Vitaminzusätze ergänzt werden (Edwards 1978, Salmon and Trout Farming in Norway, Fishing News Ltd., Norwich, S. 105-133), ohne daß es bisher gelungen wäre, durch diese Zusätze ein physiologisch vollwertiges, in der Qualität mit Naturfutter oder auch nur mit Naßfutter vergleichbares pelletiertes Trockenfutter auf Fischmehlbasis herzustellen (H. Kuhlmann, Rapp. P. v. Réun. Cons. int. Explor. Mer. 174, 1979, S. 62 und Meske, Informationen für die Fischwirtschaft, Hamburg 1980, S. 192).

Ökologisch ist das pelletierte handelsübliche Trockenfutter bedenklich wegen der hohen Umweltbelastung (O. Müller 1980, Vortrag auf der Jahreshauptversammlung des LFV Niedersachsen e. V., Walsrode, 3. 12. 1980). Diese wird zwar durch die Entwicklung neuerer « umweltfreundlicher » Futtermittel, z. B. von der Firma Ewos bzw. dem Erfinder zusammen mit der Firma Dr. R. Schott Nachfolger in Hamburg in gewissem Maße zwar herabgesetzt, kann aber nicht ganz beseitigt werden.

Besonders schwer abbaubar und deshalb umweltschädlich sind die kohlenhydrathaltigen Ballaststoffe und Bindemittel des handelsüblichen pelletierten Trockenfutters (O. Müller 1981, Auswirkungen des Abwasserabgabengesetzes auf die Binnenfischerei, Fischer und Teichwirt Nr. 6/1971, S. 975).

Die früher hauptsächlich praktizierte, auch heute noch vorkommende Fütterung mit Natur- und Naßfutter ist physiologisch besser. Bei der richtigen Wahl des Futters, z. B. Tubifex für Jungaale (Meske a. a. O.), Stinte für Lachsartige (Pohlhausen 1978, Lachse ..., Verlag P. Parey, Hamburg & Berlin, S. 130 ff), Fischrogen für alle Fische (Kuhlmann, 1979 a. a. O ; unpublizierte schwedische Versuche ; unpublizierte Versuche des Erfinders) ist es sogar optimal. Die kontinuierliche Beschaffung, der Transport, die Lagerung und auch der arbeitsaufwendige Fütterungsvorgang bei der Verwendung des Natur- und Naßfutters bereitet jedoch große Schwierigkeiten. Außerdem besteht die große Gefahr, daß bei der Fütterung mit dem Natur- und Naßfutter Parasiten und Krankheitserreger im erheblichen Umfang übertragen und hierdurch die in den Aufzuchtanlagen in unnatürlicher Dichte gehaltenen Fischbestände ernsthaft gefährdet werden. Auch kann das Naßfutter in bestimmten Fällen das Wasser stark verschmutzen. Der physiologische Vorteil wird also durch ökonomische, hygienische und ökologische Nachteile entwertet.

Aus dieser insgesamt unbefriedigenden Situation heraus sind zahlreiche Versuche unternommen worden, in der Futterherstellung neue gangbarere Wege zu suchen. So wurde z. B. das teure und knappe Fischmehl im Trockenfutter durch andere Eiweißträger ersetzt (Gropp et al. 1976, Arbeiten des Deutschen. Fischereiverbandes, Heft 19, S. 85 ff), was aber die anderen, insbesondere physiologischen Nachteile des Trockenfutters nicht beseitigt. Muscheln wurden als Naßfutter verwendet (van Thielen und Grave 1976, Arbeiten des Deutschen Fischereiverbandes, Heft 19, S. 33 ff), was aber die ökologischen Probleme beim Einsatz des Naßfutters nicht löst. Das Naßfutter wurde lyophilisiert und gefriergetrocknet, wodurch das Naßfutter mit recht hohen Kosten länger haltbar und lagerfähiger gemacht wurde, die große Gefahr der Krankheitsübertragung aber bestehen bleibt.

In den USA ist an Stelle des pelletierten Trockenfutters ein als « moist pellets » bekanntes Futter entwickelt worden, das sich aber bei uns nicht durchgesetzt hat, da es sehr schnell verdirbt.

Weiter ist es bekannt, Tier- und Fischfutter einzelne, im Minimum befindliche Aminosäuren hinzuzusetzen, z. B. Methionin, um eine bessere Futterverwertung zu erzielen.

Weiter ist es bekannt, durch Zusatz von Enzymen (Proteasen und Amylasen) die Verdaulichkeit des Trockenfutters zu steigern und so ein besseres und vor allem ein gleichmäßigeres Abwachsen der damit gefütterten Fische zu erzielen (Kieckhäfer, 1976, Arbeiten des Deutschen Fischereiverbandes, S. 76).

Durch Evaporation wird weiterhin gelegentlich das handelsübliche Trockenfutter schwimmfähig gemacht.

In der Futtermittelherstellung ist es bekannt, Fische und Fischinnereien mit Hilfe von z. B. 1 % konzentrierter Schwefelsäure und 1,5 % Kalium- oder Natriummetabisulfit in für längere Zeit haltbare, physiologisch hochwertige Kaltsilage zu verwandeln (H.-J. Papenfuss und K. Röpke, Fischmehl, Fischöl und andere Seetierprodukte, Kammer der Technik, Leipzig 1966, 13.2.1.2) oder nach anderen Verfahren wie z. B. mit Hilfe von 1,65 % technischer Schwefelsäure und 1 % Ameisensäure oder mit Kohlenhydraten zur Durchführung einer milchsauren Vergärung (M. Becker und K. Nehring, Handbuch der Futtermittel, Verlag Paul Parey, 1967, Seite 237 bzw. 236), wobei diese bekannte Kaltsilage aber wegen ihrer flüssigen Konsistenz nicht als Fischfutter verwendbar ist.

Es ist seit jeher bekannt, Milz und Leber von Rindern und Schweinen zu schaben und für besonders empfindliche Jungfische, früher überhaupt auch an Forellenbrut zu verfüttern. Dieses Verfahren ist jedoch besonders arbeitsaufwendig. Die geschabte Milz und Leber sind nicht lange haltbar und verschmutzen bei der Anwendung größerer Mengen das Wasser erheblich.

Der Erfindung liegt die Aufgabe zugrunde, ein Verfahren zur Herstellung eines in der Praxis der Fischaufzucht neuartigen Fischfutters bereitzustellen, dessen Enzyme, Vitamine, andere Wirkstoffe und Proteine möglichst nicht denaturiert sind. Das Fischfutter soll andererseits auch frei von Krankheitserregern und Parasiten, leicht zu transportieren, längere Zeit zu lagern und bequem zu verfüttern sein und möglichst wenig unverdauliche, die Umwelt belastende Bestandteile enthalten.

Erfindungsgemäß wird diese Aufgabe dadurch gelöst, daß zur Herstellung von Trockenfutter für Fische unter weitgehender Schonung der im Naturfutter vorkommenden Wirkstoffe zerkleinertes tierisches Ausgangsmaterial sauer oder alkalisch behandelt wird, wobei die Behandlung eine Kaltsilage ist, die ohne Erwärmung erfolgt, das behandelte Material auf annähernd neutrale Reaktion eingestellt und bei Temperaturen unter 42 °C getrocknet wird.

Das zerkleinerte, tierische Ausgangsmaterial wird nach bekannten Verfahren kalt siliert. Bei Zugabe von Säure wird durch basische Stoffe neutralisiert, oder die Proteine werden durch anschließende Alkalisierung weiter abgebaut und sodann neutralisiert. Diese tierische Substanzen können auch teils sauer und teils alkalisch siliert und sodann unter Neutralisation vereinigt werden.

Als tierisches Ausgangsmaterial, sogenannte Rohwaren, für die Herstellung des erfindungsgemäßen Fischfutters sind geeignet :

Innereien von Fischen, insbesondere Rogen, Milch, Mägen, Därme mit Inhalt und Leber ; Schlachthofabfälle von Rindern und Schweinen, insbesondere Milz, Leber, Därme mit Inhalt, Mägen und Blut, Geflügelinnereien, Frischfisch, untermaßige Garnelen (« Gammel »), Muscheln, Tubifex und andere tierische Substanzen für sich allein oder im Gemisch.

Dieses Material wird je nach Zugang und Verwendungszweck des Futters fein kleinert und sauer siliert, z. B. mit Schwefelsäure, ggf. unter Zusatz von Ameisensäure, Kaliummetabisulfit oder Natriumhydrogensulfit. Gebräuchliche Kaltsilagerezepturen werden von H.-J. Papenfuss und K. Röpke sowie von M. Becker und K. Nehring mitgeteilt, jeweils a. a. O.. So wird z. B. mit 1 % konzentrierter Schwefelsäure und 1,5 % Kalium- oder Natriummetabisulfit und/oder mit anderen, den Silierungsprozeß sowie ggf. auch die Vorverdauung fördernden, sowie Krankheitserreger und Parasiten abtötenden und konservierenden Chemikalien durchgemischt, wonach die so entstandene saure Kaltsilage in dem Arbeitsgang der Stoffausbalancierung je nach Herkunft der Rohwaren und dem Verwendungszweck des Futters mit einzelnen Aminosäuren, Fetten, Vitaminen, Antibiotika, Enzymen, Mineralien, Spurenelementen, die, bezogen auf den Verwendungszweck, im Minimum sind, angereichert wird. Solche Zugaben, etwa Zugaben von Enzympräparaten wie Pepsinextrakte, können auch vor bzw. bei der Silierung erfolgen. Vorzugsweise werden dem Ausgangsmaterial Aminosäuren, Enzyme, Fette zugefügt, und es wird im sauren Milieu siliert und dann zur fortgesetzten Vorverdauung im alkalischen Milieu der pH-Wert erhöht. Als Enzyme können Verdauungsenzyme hinzugesetzt werden und ihnen Zeit gegeben werden, auf das noch nicht neutralisierte und noch nicht getrocknete Material einzuwirken.

Sodann erfolgt der Arbeitsgang der Neutralisierung durch Zugabe physiologisch verträglicher basischer Stoffe, bis eine annähernd neutrale Reaktion erreicht ist, wonach weiter im Bedarfsfall im Arbeitsgang des Formens der Futtermasse, ggf. nach Hinzufügung eines Bindemittels, z. B. Gelatine oder geeigneter Alginate, auf Walzen und durch Schneiden der halbgetrockneten Masse oder auf andere Weise eine für den Zweck angemessene Form (z. B. Körner, stilisierte Fische usw) gegeben wird. Werden Bindemittel vor dem Trocknen zugegeben, kann ggf. unter Berücksichtigung des Aufbaus dieser Bindemittel durch Zusatz von Aminosäuren eine physiologisch optimale Zusammensetzung des Futters eingestellt werden. Mit dem Bindemittel kann ein im Wasser nicht sofort auflösbarer Überzug auf dem Futter gebildet werden, und es können in das Futter oder in den Futterüberzug Aromastoffe eingemischt werden, die dazu geeignet sind, die Fische anzulocken und/oder ihren Appetit zu steigern.

Schließlich wird im Arbeitsgang der Schontrocknung bei Wärmegraden unter 42°, vorzugsweise jedoch über 0 °C, in einem Temperaturbereich, in dem noch keine Denaturierung der Enzyme, Proteine und Vitamine durch Wärme eintritt, der Wassergehalt des Futters so weit gesenkt, daß über eine Konservierung durch Silierung hinaus ein weiterer Konservierungseffekt ebenfalls durch Trocknung erfolgt. Die Trocknung erfolgt in an sich bekannter Weise etwa durch Luftumwälzung oder Einblasen vorzugsweise trockener Luft in den Trockenraum. Eine Vakuumtrocknung ist ebenfalls möglich, sollte jedoch, da energieaufwendig, im Regelfall nicht erforderlich sein. Ggf. wird während der Trocknung in einem zusätzlichen Arbeitsgang des Schäumens in die halbflüssige Futtermasse Luft oder ein anderes inertes Gas hineingeblasen oder hineingerührt, um das fertige Futter schwimmfähig zu machen. Im Arbeitsgang der Endzubereitung wird sodann das trockene Futter weiter zerkleinert und gemahlen. Größere Stücke können auch mit einem wasserundurchlässigen, das Auslaugen verlangsamenden Überzug z. B. aus Gelatine, Alginaten oder anderen geeigneten Stoffen versehen werden.

Im Anschluß an die saure Silierung kann erfindungsgemäß auch eine Alkalisierung erfolgen. Zur Erzielung eines weiteren Vorverdauungseffektes kann der pH-Wert durch Zusatz von Futterkalk oder anderen physiologisch verträglichen basischen Stoffen auf so hohe Werte gesteigert werden, daß ein Abbau der Proteinbestandteile durch z. B. Trypsin erfolgt, wonach dann der Arbeitsgang der Neutralisierung erfolgt, und zwar bei stattgefundener Alkalisierung durch Zugabe nichttoxischer Säuren. Es kann ausschließlich alkalisch siliert werden mit anschließender Neutralisation. Weiterhin kann auch ein Teil der Rohwaren sauer und ein Teil alkalisch siliert und die Neutralisation durch Vermischen beider Teile bewirkt werden.

Die durch die Erfindung erzielten Vorteile bestehen insbesondere darin, daß die für wertvolle, aber gleichzeitig anspruchsvolle Fische wie Lachse und Aale unentbehrlichen Wirkstoffe des Futters durch die Konservierung nicht denaturiert werden, wodurch ein besseres und gleichmäßigeres Abwachsen erfolgt. Hierdurch ist das Futter bekömmlicher und natürlicher als das handelsübliche Trockenfutter.

Bei der erfindungsgemäßen Futterherstellung wird der Arbeitsgang der Fischmehlherstellung eingespart und so trotz anderer notwendig werdender Arbeitsgänge die Gesamtherstellung insgesamt verbilligt und abgekürzt.

Die Verwertbarkeit und Bekömmlichkeit wird durch die bei der Herstellung erfolgende Vorverdauung durch Pepsin, evtl. auch durch Trypsin und/oder andere Enzyme gesteigert, wodurch es insbesondere für empfindliche (Jungaal) und anspruchsvolle (Lachse) Fische besser verwertbar wird. Das Futter wird auf diese Weise billiger hergestellt als durch Lyophilisierung. Hierbei besteht trotz der weitgehenden Ursprungsbelassenheit des Futters im Gegensatz zu Lyophilaten keine Gefahr der Krankheitsübertragung.

Das Futter kann längere Zeit gelagert und leichter transportiert und verfüttert werden als das herkömmliche Frisch- und Naßfutter und auch als die herkömmliche Kaltsilage.

Ein wichtiges Ausgangsmaterial des erfindungsgemäßen Futters, nämlich Fischinnereien und Schlachthofabfälle, sind ein billigeres und gleichzeitig höherwertiges Material als das Fischmehl, der wichtigste Bestandteil des herkömmlichen Trockenfutters. Auch lassen sich für die menschliche Ernährung nicht gebräuchliche, aber in Massen vorkommende Fische wie Stichlinge, Tobiasfische, Plötzen, untermaßige Stinte und Heringe sowie untermaßige Garnelen (« Gammel ») sinnvoll fangen und verwenden. Zumal wird das Futter insbesondere von fleischfressenden Fischen vollständiger verdaut und deshalb die Umwelt weniger belastet als bei der Fütterung mit herkömmlichen pelletierten Trokkenfuttermitteln.

Schließlich können größere Fische mit langgezogenen etwa fischförmigen großen Brocken gefüttert werden. Hierdurch können die Futterverluste und die Wasserverschmutzung geringer gehalten werden als bei dem heute üblichen breiigen Frisch- und Naßfutter und bei dem pelletierten Trockenfutter.

**Patentansprüche**

1. Verfahren zur Herstellung von Trockenfutter für Fische unter weitgehender Schonung der im Naturfutter vorkommenden Wirkstoffe, indem zerkleinertes tierisches Ausgangsmaterial sauer oder alkalisch behandelt wird, wobei die Behandlung eine Kaltsilage ist, die ohne Erwärmung erfolgt, das behandelte Material soweit zur Einstellung einer annähernd neutralen Reaktion erforderlich neutralisiert und bei Temperaturen unter 42 °C getrocknet wird.

2. Verfahren nach Anspruch 1, dadurch gekennzeichnet, daß die Trocknung bei über 0 °C erfolgt.

3. Verfahren nach Anspruch 1 oder 2, dadurch gekennzeichnet, daß ein Teil des Ausgangsmaterials sauer und ein weiterer Teil alkalisch siliert wird, und die Neutralisation durch Zusammengeben beider Teile bewirkt wird.

4. Verfahren nach einem der vorhergehenden Ansprüche, dadurch gekennzeichnet, daß dem Ausgangsmaterial Aminosäuren, Enzyme, Fette zugefügt werden und im sauren Milieu siliert und dann zur fortgesetzten Vorverdauung im alkalischen Milieu der pH-Wert erhöht wird.

5. Verfahren nach Anspruch 4, dadurch gekennzeichnet, daß als Enzyme Verdauungsenzyme hinzugesetzt werden und daß ihnen Zeit gegeben wird, auf das noch nicht neutralisierte und noch nicht getrocknete Material einzuwirken.

6. Verfahren nach einem der vorhergehenden Ansprüche, dadurch gekennzeichnet, daß Bindemittel vor dem Trocknen zugegeben werden, und daß gegebenenfalls unter Berücksichtigung des Aufbaus dieser Bindemittel durch den Zusatz von Aminosäuren eine physiologisch optimale Zusammensetzung des Futters eingestellt wird.

7. Verfahren nach Anspruch 6, dadurch gekennzeichnet, daß mit dem Bindemittel ein im Wasser nicht sofort auflösbarer Überzug auf dem Futter gebildet wird.

8. Verfahren nach einem der vorhergehenden Ansprüche, dadurch gekennzeichnet, daß in das Futter oder in den Futterüberzug Aromastoffe eingemischt werden, die dazu geeignet sind, die Fische anzulocken und/oder ihren Appetit zu steigern.

9. Verfahren nach einem der vorhergehenden Ansprüche, dadurch gekennzeichnet, daß beim Trocknen Luft oder inerte Gase in die neutralisierte Silage hineingeblasen oder hineingerührt werden.

10. Verfahren nach einem der vorhergehenden Ansprüche, dadurch gekennzeichnet, daß das Futter zur Fütterung größerer Raubfische in langgezogene Stücke, vorzugsweise in an stilisierte Futterfische erinnernde Stücke geformt wird.

## Claims

1. A process for preparing dry feed for fish while preserving to a great extent the active agents present in natural feed, in that cut animal starting material is either acid or alkali treated, the treatment being a cold-silage taking place without heating, the treated material is neutralized as much as it is necessary to adjusted to an approximately neutral reaction and is dried at temperatures below 42 °C.

2. The process as claimed in claim 1, characterized in that the drying takes place at temperatures in excess of 0 °C.

3. The process as claimed in claim 1 or claim 2, characterized in that a part of the starting material is acidensilaged and a further part is alkali-ensilaged, and the neutralization is effected by combining both parts.

4. The process as claimed in any of the preceding claims, characterized in that amino-acids, enzymes, fats are added to the starting material, ensilaging is performed in acid environment, and subsequently the pH is increased for continued preliminary digestion in an alkaline environment.

5. The process as claimed in claim 4, characterized in that as enzymes digestive enzymes are added and that these are given time to act on the not yet neutralized and not yet dried material.

6. The process as claimed in any of the preceding claims, characterized in that prior to the drying step binding agents are added, and that optionally, taking into consideration the composition of such binding agents, a physiologically optimum composition of the feed is adjusted by the addition of amino-acids.

7. The process as claimed in claim 6, characterized in that a coating is formed with the binding agent on the feedstuff, said coating being not readily dissolvable in water.

8. The process as claimed in any of the preceding claims, characterized in that flavouring materials are blended with the feed or with the feed coating, said flavouring materials being suited as bait for the fish and/or to increase their appetite.

9. The process as claimed in any of the preceding claims, characterized in that during the drying step air or inert gases are either blown or stirred into the neutralized silage feed.

10. The process as claimed in any of the preceding claims, characterized in that for feeding of larger predatory fish the feedstuff is formed into elongate pieces, preferably into pieces similar to stylized feed fish.

## Revendications

1. Procédé de préparation d'un aliment sec pour le poisson, qui, tout en ménageant, dans une grande mesure, les substances actives présentes dans l'aliment naturel, consiste à traiter par voie acide ou par voie alcaline, la matière de départ animale fragmentée, le traitement étant un ensilage à froid qui s'effectue sans échauffement, à neutraliser la matière traitée jusqu'à obtention d'une réaction à peu près neutre et à sécher à des températures inférieures à 42 °C.

2. Procédé suivant la revendication 1, caractérisé en ce qu'il consiste à effectuer le séchage à une température supérieure à 0 °C.

3. Procédé suivant la revendication 1 ou 2, caractérisé en ce qu'il consiste à ensiler à l'état acide une partie de la matière de départ et à l'état alcalin une autre partie de cette matière, et à provoquer la neutralisation par réunion des deux parties.

4. Procédé suivant l'une des revendications précédentes, caractérisé en ce qu'il consiste à appliquer à la matière de départ des aminoacides, des enzymes, des matières grasses et à ensiler en milieu acide et ensuite pour faire se poursuivre la digestion préalable, à augmenter la valeur du pH en milieu alcalin.

5. Procédé suivant la revendication 4, caractérisé en ce qu'il consiste à ajouter comme enzyme une enzyme de digestion et à lui donner le temps d'agir sur la matière qui n'est pas encore neutralisée et qui n'est pas encore séchée.

6. Procédé suivant l'une des revendications précédentes, caractérisé en ce qu'il consiste à ajouter l'agent liant avant le séchage et à établir une composition physiologiquement optimale de l'aliment, par l'addition d'aminoacides, le cas échéant en tenant compte de la structure de l'agent liant.

7. Procédé suivant la revendication 6, caractérisé en ce qu'il consiste à former, sur l'aliment, un enrobage en l'agent liant, qui ne peut pas se dissoudre immédiatement dans l'eau.

8. Procédé suivant l'une des revendications précédentes, caractérisé en ce qu'il consiste à mélanger à l'aliment ou à l'enrobage de l'aliment des substances aromatiques qui conviennent pour attirer le poisson et/ou pour en augmenter l'appétit.

9. Procédé suivant l'une des revendications précédentes, caractérisé en ce qu'il consiste, lors du séchage, à insuffler ou à introduire par brassage de l'air ou des gaz inertes dans la matière ensilée neutralisée.

10. Procédé suivant l'une des revendications précédentes, caractérisé en ce qu'il consiste à conformer l'aliment, en vue de l'alimentation de poissons prédateurs d'assez grandes dimensions, en morceaux étirés en longueur, de préférence en morceaux rappelant, d'une manière stylisée, les vifs.